# EUROPEAN PATENT SPECIFICATION

(11) **EP 3 608 576 B1**
(45) Date of publication and mention of the grant of the patent: **23.12.2020**
(21) Application number: 17904610.7
(22) Date of filing: 17.10.2017
(51) Int. Cl.: F16L 37/092

(54) **NEW TYPE OF RAPID PIPE JOINT**
NEUER TYP VON SCHNELLER ROHRVERBINDUNG
NOUVEAU TYPE DE JOINT DE TUYAU RAPIDE

(30) Priority: 07.04.2017 CN 201710224961; 20.09.2017 CN 201721205529 U
(43) Date of publication of application: 12.02.2020
(73) Proprietor: Shanghai FIXANIT HVAC Tech Co., Ltd, Shanghai 201404 (CN)
(72) Inventor: PU, Xiangming, Shanghai 201404 (CN); CHEN, Haijian, Shanghai 201404 (CN); WANG, Jiang, Shanghai 201404 (CN)
(74) Representative: Kayahan, Senem
(86) International application number: PCT/CN2017/106500
(87) International publication number: WO 2018/184371

(56) References cited:
- EP-A1- 2 508 784
- EP-A2- 1 995 506
- WO-A1-2006/113952
- WO-A1-2006/135227
- AT-A4- 508 668
- CN-A- 101 311 603
- CN-A- 106 838 517
- CN-U- 206 647 665
- DE-A1- 19 654 435
- JP-A- 2011 089 565

## Description

### Technical Field

The present invention relates to the technical field of pipe installation, in particular to a new quick pipe coupling.

### Background

The quick coupling of water pipe can realize a quick connection between water pipe and pipe joint, which is convenient, quick and labor-saving, can save time of installation and speed up the installation. However, on the basis of quick installation, reliable connection should be ensured, and both convenience and reliability of use should be considered by the quick pipe coupling with excellent design. The existing water pipe quick coupling is not very convenient to use, and the installation state of the water pipe cannot be known in time during the process of installing the water pipe.

Relevant prior art includes EP 2508784 A1 (ARON KASEI KK [JP]) 10 October: 2012, which discloses a quick pipe coupling comprising a joint body, an outer shell, an outer ring gear and an inner ring gear.

### Summary

The objective of the present invention is to overcome the deficiencies of the prior art and design a new quick pipe coupling. The installation state of the pipe inside the quick pipe coupling can be observed visually by the operator and the hidden danger of water leakage can be avoided. In order to achieve the above-mentioned objective, the technical solution adopted by the present invention is as follows.

A new quick pipe coupling, mainly including a joint body, wherein the joint body as a whole is a hollow tubular structure, a lower part of the joint body is provided with a spiral interface, a middle part of the joint body is provided with a connecting part connected to an outer shell, an upper part of the joint body is a tubular structure for sleeving into a pipe and the outer wall of the upper part is provided with a plurality of sealing ring grooves and inner ring gear grooves, and the upper part of the inner ring gear groove is oblique. The outer shell is formed by splicing an upper outer shell and a lower outer shell at upper and lower positions, the lower outer shell is a transparent tubular structure, a lower part of the lower outer shell is connected to the joint body, the outer shell is a circular sleeve with an upper part in a frustum shape and an oblique cross section at the inner side of the upper part. The outer ring gear is arranged inside the outer shell and abuts against the outer shell. The outer side of the upper part of the outer ring gear is provided with an outer ring gear bevel matched with the upper part in the frustum shape of the outer shell. The lower part of the outer ring gear is provided with a window hole, and the inner wall of the outer ring gear is provided with anti-skid teeth which are oblique downward. An inner ring gear is arranged inside the inner ring gear groove. The inner ring gear consists of two identical semicircular parts. The inner side of the upper part of the inner ring gear is provided with an inner ring gear bevel which is matched with the oblique upper part of the inner ring gear groove, and an inner ring gear bushing is arranged below the inner ring gear. The inner ring gear bushing consists of two identical semicircular parts, and the inner ring gear bushing is respectively connected to the lower part of the inner ring gear and the lower part of the outer ring gear in a snap-fit manner and can move up and down together with the lower part of the inner ring gear and the lower part of the outer ring gear. The outer wall of the inner ring gear is provided with anti-skid teeth which are oblique downward. Sealing rings are arranged inside the sealing ring grooves.

A new quick pipe coupling, mainly including a joint body, wherein the joint body as a whole is a hollow tubular structure, the lower part of the joint body is provided with a spiral interface, the middle part of the joint body is provided with a connecting part connected to an outer shell, the upper part of the joint body is a tubular structure for sleeving into a pipe and the outer wall of the upper part is provided with a plurality of sealing ring grooves and inner ring gear grooves, and the upper part of the inner ring gear groove is oblique. The outer shell is formed by splicing an upper outer shell and a lower outer shell at upper and lower positions, the lower outer shell is a transparent tubular structure, a lower part of the lower outer shell is connected to the joint body, the outer shell is a circular sleeve with an upper part in a frustum shape and an oblique cross section at the inner side of the upper part. The outer ring gear is arranged inside the outer shell and abuts against the outer shell. The outer side of the upper part of the outer ring gear is provided with an outer ring gear bevel matched with the upper part in the frustum shape of the outer shell. The lower part of the outer ring gear is provided with a window hole, and the inner wall of the outer ring gear is provided with anti-skid teeth which are oblique downward. An inner ring gear is arranged inside the inner ring gear groove. The inner ring gear consists of two identical semicircular parts. The inner side of the upper part of the inner ring gear is provided with an inner ring gear bevel which is matched with the oblique upper part of the inner ring gear groove, and an inner ring gear bushing is arranged below the inner ring gear. The inner ring gear bushing consists of two identical semicircular parts, and the inner ring gear bushing is respectively connected to the lower part of the inner ring gear and the lower part of the outer ring gear in a snap-fit manner and can move up and down together with the lower part of the inner ring gear and the lower part of the outer ring gear. The outer wall of the inner ring gear is provided with anti-skid teeth which are oblique downward. Sealing rings are arranged inside the sealing ring grooves. The cavity between the inner ring gear and the outer ring gear is a movable cavity into which a pipe can be inserted. A visual ring is movably arranged in the movable cavity, and the visual ring includes an annular body, a plurality of protrusions extending from the outer side wall of the annular body and bosses arranged between any two protrusions. The protrusions are uniformly distributed in a circumferential direction of the annular body.

Further, the thickness of the annular body of the visual ring is smaller than the height of the visual hole.

Further, the visual ring is a green safety washer.

Further, the number of bosses is two, and the two bosses are symmetrically arranged with each other.

Further, the upper part of the outer ring gear is provided with a plurality of outer ring gear vertical grooves which are vertical.

Further, the upper part of the inner ring gear is provided with a plurality of inner ring gear vertical grooves which are vertical.

Further, a stepped splicing surface is arranged between the upper outer shell and the lower outer shell.

The advantages of the present invention are as follows.
1. The quick pipe coupling of the present invention adopts a self-locking structure. By arranging the inner ring gear and the outer ring gear, arranging downward oblique anti-skid teeth on the outer side wall of the inner ring gear and downward oblique anti-skid teeth on the inner side wall of the outer ring gear, and using the cavity between the inner ring gear and the outer ring gear as the movable cavity for pipe insertion, when the pipe is inserted into the movable cavity, the pipe can be locked between the anti-skid teeth of the inner ring gear and the anti-skid teeth of the outer ring gear. By adopting the form of double locking the inside and the outside of the pipe, when the water pressure is within the specified value range, the larger the water pressure is, the more tightly the pipe locks.
2. Construction personnel can easily install without using tools, thus saving time and labor in the installation process and greatly improving the work efficiency.
3. The lower part of the outer ring gear of the quick pipe coupling is designed with the window hole and a visual ring inside the movable cavity, so that the construction personnel can visually see through the visual hole outside whether the inner pipe is installed properly , thus avoiding the hidden danger of water leakage.

### Brief Description of the Drawings

FIG. 1 is schematic diagram I of the overall structure of the present invention.
FIG. 2 is a schematic structural view of the joint body of the present invention.
FIG. 3 is a schematic structural diagram of the outer ring gear of the present invention;
FIG. 4 is a schematic structural diagram of the inner ring gear of the present invention;
FIG. 5 is schematic diagram II of the overall structure of the present invention.
FIG. 6 is a schematic structural diagram of the visual ring of the present invention;

The specific meanings of the reference numerals in the figure are: 1, pipe, 2, joint body, 3, outer ring gear, 4, inner ring gear, 5, inner ring gear bushing, 6, upper outer shell, 7, lower outer shell, 8, sealing ring, 9, outer ring gear bevel, 10, inner ring gear bevel, 11, sealing ring groove, 12, inner ring gear groove 13, window hole, 14, outer ring gear vertical groove, 15, inner ring gear vertical groove, 16, visible ring, 17, connecting part, 18, movable cavity, 19, annular body, 20, protrusion, 21, boss and 22, splicing surface.

### Detailed Description

In order to make the objective, technical solution and advantages of the present invention clearer, the present invention will be described by specific embodiments shown in the accompanying drawings. However, it should be understood that these descriptions are merely exemplary and are not intended to limit the scope of the present invention. In addition, in the following description, descriptions of well-known structures and techniques are omitted to avoid making the concepts of the present invention unnecessarily confusing.

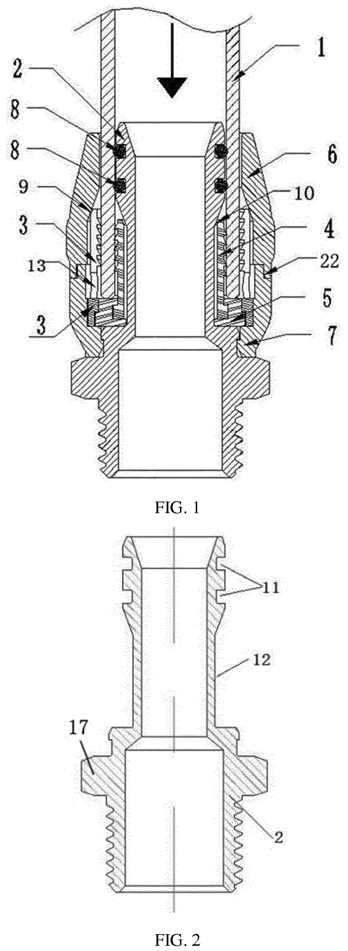

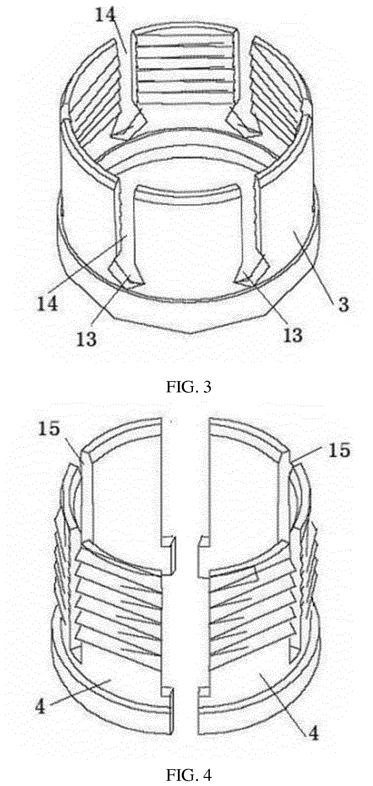

Embodiment 1 is as shown in FIGs. 1-4. A new quick pipe coupling mainly includes joint body 2, joint body 2 as a whole is a hollow tubular structure, the lower part of joint body 2 is provided with a spiral interface, the middle part of joint body 2 is provided with connecting part 17 connected to an outer shell. Connecting part 17 is located between inner ring gear groove 12 and the spiral interface, the upper part of joint body 2 is a tubular structure for sleeving into pipe 1 and the outer wall of the upper part of the joint body is provided with two sealing ring grooves 11 and inner ring gear grooves 12, and the upper part of inner ring gear groove 12 is oblique. The outer shell is formed by splicing upper outer shell 6 and lower outer shell 7 at upper and lower positions, lower outer shell 7 is a transparent tubular structure, a lower part of lower outer shell 7 is connected to the joint body 2, the outer shell is a circular sleeve with an upper part in a frustum shape and an oblique cross section at the inner side of the upper part. Outer ring gear 3 is arranged inside the outer shell and abuts against the outer shell. The outer side of the upper part of outer ring gear 3 is provided with outer ring gear bevel 9 matched with the upper part of the outer shell in the frustum shape. The lower side of the outer ring gear is provided with window hole 13, and the inner wall of outer ring gear 3 is provided with anti-skid teeth which are oblique downward. Inner ring gear 4 is arranged inside inner ring gear groove 12. Inner ring gear 4 consists of two identical semicircular parts. The inner side of the upper part of inner ring gear 4 is provided with inner ring gear bevel 10 which is matched with the oblique upper part of inner ring gear groove 12, and inner ring gear bushing 5 is arranged below inner ring gear 4. Inner ring gear bushing 5 consists of two identical semicircular parts, and inner ring gear bushing 5 is respectively connected to the lower part of inner ring gear 4 and lower part of outer ring gear 3 in a snap-fit manner and can move up and down together with the lower part of inner ring gear 4 and lower part of outer ring gear 3. The outer wall of inner ring gear 4 is provided with anti-skid teeth which are oblique downward. Sealing rings 8 are arranged inside sealing ring groove 11.

Outer ring gear 3 is provided with a plurality of outer ring gear vertical grooves 14 which are vertical. In this embodiment, the upper part of outer ring gear 3 is provided with six outer ring gear vertical grooves 14 which are vertical.

Inner ring gear 4 is provided with a plurality of inner ring gear vertical grooves 15 which are vertical. In this embodiment, the upper part of inner ring gear 4 is provided with six inner ring gear vertical grooves 15 which are vertical.

Stepped splicing surface 16 is arranged between upper outer shell 6 and lower outer shell 7.

When in use, pipe 1 is inserted into the quick pipe coupling according to the direction indicated by the arrow in FIG. 1. Pipe 1 first passes through sealing rings 8 to ensure the sealing performance between pipe 1 and joint body 2. Pipe 1 continues to be inserted inwards through outer ring gear 3 and inner ring gear 4, and inner ring gear 4 and outer ring gear 3 snap pipe 1 under the effect of an insertion force of pipe 1. After pipe 1 is inserted into the shoulder of joint body 2, the installation is finished. It can be determined whether the installation is qualified through the transparent lower outer shell and then through the window hole (if pipe 1 is inserted into the bottom of the movable cavity, the installation is qualified, but if pipe 1 is not inserted into the bottom of the movable cavity, the installation is unqualified). After the installation and connection are completed, due to the effect of the water pressure on pipe 1, pipe 1 will drive inner ring gear 4 and outer ring gear 3 to creep in an opposite direction of the arrow in FIG. 1, and outer ring gear 3 and inner ring gear 4 will snap pipe 1 under the action of the designed bevel (outer ring gear 3 will snap inward and inner ring gear 4 will snap outward). After the installation of pipe 1 and the quick pipe coupling is completed, if the construction personnel need to separate the pipe and the quick pipe coupling, the installation worker only needs to rotate the pipe or the quick pipe coupling counterclockwise to separate the pipe and the quick pipe coupling, and then reuse and install.

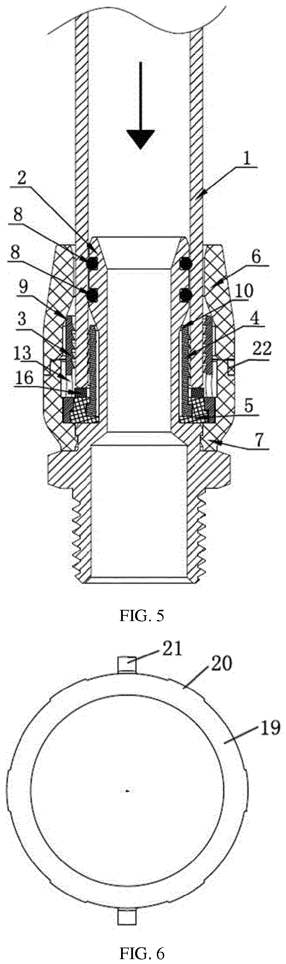

Embodiment 2 is as shown in FIGs. 2-6. This embodiment differs from Embodiment 1 in that the cavity between inner ring gear 4 and outer ring gear 3 is movable cavity 18 into which the pipe can be inserted, and visual ring 16 is movably arranged inside movable cavity 18. Visual ring 16 includes annular body 19, a plurality of protrusions 20 extending from the outer side wall of annular body 19, and bosses 21 arranged between any two protrusions 20. In this embodiment, the number of protrusions 20 is six, and protrusions 20 are uniformly distributed in a circumferential direction of annular body 19. The number of bosses 21 is two, and two bosses 21 are arranged symmetrically to each other. The thickness of the annular body of visual ring 16 is smaller than the height of window hole 13. In this embodiment, visual ring 16 is a green safety washer. Other specific implementation ways are the same as that in Embodiment 1 and are not repeated here

During use, pipe 1 is inserted into the movable cavity of the quick pipe coupling from top to bottom in the direction indicated by the arrow in FIG. 1. Pipe 1 first passes sealing rings 8, sealing rings 8 can ensure the sealing between pipe 1 and joint body 2. Pipe 1 continues to be inserted inwards through outer ring gear 3 and inner ring gear 4, and inner ring gear 4 and outer ring gear 3 snap pipe 1 under the effect of an insertion force of pipe 1. During the downward movement of pipe 1, an end of pipe 1 contacts an upper surface of the visible ring. The pipe abuts against visible ring 16 and moves downward together with visible ring 16. When visible ring 16 moves to the bottom of the movable cavity, bosses 21 of visible ring 16 are engaged with two outer ring gear vertical grooves 14, positioning the visible ring 16. The installation process of pipe 1 is finished. Construction personnel can determine whether the installation of the pipe is qualified through the transparent lower outer shell and through the window hole. The contact of the green visual ring with the bottom of the movable cavity means that pipe 1 has been inserted into the bottom of the movable cavity, the installation of the pipe is qualified, and the installation is not qualified if pipe 1 is not inserted into the bottom of the movable cavity. After the installation and connection of the pipe are completed, water flows into the pipe. Due to the effect of the water pressure on pipe 1, pipe 1 will drive inner ring gear 4 and outer ring gear 3 to creep in an opposite direction of the arrow in FIG. 1, and outer ring gear 3 and inner ring gear 4 will snap pipe 1 under the action of the anti-skid teeth (outer ring gear 3 will snap inward and inner ring gear 4 will snap outward), which indicates that the installation is complete and cannot be disassembled.

Finally, it should be noted that the above-mentioned embodiments are merely used to illustrate the technical solution of the present invention and not to limit it. Although the present invention has been described in detail with reference to preferred embodiments, those of ordinary skill in the art will understand that the specific embodiments of the present invention may still be modified, or some technical features may be equivalently replaced without departing from the scope of the technical solution claimed by the present invention.

## Claims

1. A new quick pipe (1) coupling, comprising:
a joint body (2), an outer shell (6, 7), an outer ring gear (3), an inner ring gear (4) and an inner ring gear bushing (5), wherein
the joint body (2) as a whole is a hollow tubular structure, a lower part of the joint body (2) is provided with a spiral interface, a middle part of the joint body (2) is provided with a connecting part (17) connected to the outer shell, an upper part of the joint body (2) is a tubular structure for sleeving into a pipe (1), and an outer wall of the joint body (2) is provided with a plurality of sealing ring grooves (11) and an inner ring gear (4) groove an upper part of the inner ring gear (4) groove is oblique; the outer shell (6, 7) is formed by splicing an upper outer shell (6) and a lower outer shell (7) at upper and lower positions, the lower outer shell (7) is a transparent tubular structure and a lower part of the lower outer shell (7) is connected to the joint body (2), the outer shell is a circular sleeve with an upper part in a frustum shape and an oblique cross section at an inner side of an upper part of the outer shell; the outer ring gear (3) is arranged inside the outer shell and abuts against the outer shell, an outer side of the upper part of the outer ring gear (3) is provided with an outer ring gear (3) bevel matched with the upper part of the outer shell in the frustum shape; a lower part of the outer ring gear (3) is provided with a window hole (13), and an inner wall of the outer ring gear (3) is provided with anti-skid teeth and the anti-skid teeth are oblique downward, the inner ring gear (4) is arranged inside the inner ring gear (4) groove , the inner ring gear (4) consists of two identical semicircular parts, an inner side of an upper part of the inner ring gear (4) is provided with an inner ring gear (4) bevel matched with the oblique upper part of the inner ring gear (4) groove, and the inner ring gear bushing (5) is arranged below the inner ring gear (4); the inner ring gear bushing (5) consists of two identical semicircular parts, and the inner ring gear bushing is respectively connected to a lower part of the inner ring gear (4) and a lower part of the outer ring gear (3) in a snap-fit manner and moves up and down together with the lower part of the inner ring gear (4) and the lower part of the outer ring gear (3), an outer wall of the inner ring gear (4) is provided with anti-skid teeth and the anti-skid teeth are oblique downward; sealing rings (8) are arranged inside the sealing ring grooves (11).

2. The new quick pipe (1) coupling according to claim 1, **characterized in that** a cavity between the inner ring gear (4) and the outer ring gear (3) is a movable cavity (18), the cavity is configured for the pipe (1) to insert; a visual ring is movably arranged in the movable cavity (18), and the visual ring comprises an annular body (19), a plurality of protrusions (20) extending from an outer side wall of the annular body (19) and bosses (21) arranged between any two protrusions (20); the protrusions (20) are uniformly distributed in a circumferential direction of the annular body (19).

3. The new quick pipe (1) coupling according to claim 2, **characterized in that** a thickness of the annular body (19) of the visual ring is smaller than a height of the visual hole.

4. The new quick pipe (1) coupling according to claim 3, **characterized in that** the visual ring is a green safety washer.

5. The new quick pipe (1) coupling according to claim 2, **characterized in that** a number of the bosses (21) is two, the bosses (21) are arranged symmetrically to each other.

6. The new quick pipe (1) coupling according to claim 1 or 2, **characterized in that** the upper part of the outer ring gear (3) is provided with a plurality of vertical outer ring gear (3) vertical grooves.

7. The new quick pipe (1) coupling according to claim 1 or 2, **characterized in that** the upper part of the inner ring gear (4) is provided with a plurality of vertical inner ring gear (4) vertical grooves.

8. The new quick pipe (1) coupling according to claim 1 or 2, **characterized in that** a stepped splicing surface (22) is arranged between the upper outer shell (6) and the lower outer shell (7).

## Patentansprüche

1. Neue Schnellkupplung für Rohre (1), umfassend:
ein Verbindungskörper (2), eine Außenschale (6, 7), ein Außenzahnkranz (3), ein Innenzahnkranz (4) und eine Innenzahnkranzbuchse (5), wobei der Verbindungskörper (2) als Ganzes eine hohle röhrenförmige Struktur ist, ein unterer Teil des Verbindungskörpers (2) mit einer Spiralschnittstelle versehen ist, ein mittlerer Teil des Verbindungskörpers (2) mit einem Verbindungsteil (17) versehen ist, das mit der Außenschale verbunden ist, ein oberer Teil des Verbindungskörpers (2) eine röhrenförmige Struktur zum Einschieben in ein Rohr (1) ist, und eine Außenwand des Verbindungskörpers (2) mit einer Vielzahl von Dichtungsringnuten (11) und einem Innenzahnkranz (4) versehen ist, wobei eine Nut ein oberer Teil der Nut des Innenzahnkranzes (4) schräg ist; die äußere Schale (6, 7) durch Zusammenfügen einer oberen äußeren Schale (6) und einer unteren äußeren Schale (7) an oberen und unteren Positionen gebildet wird, die untere äußere Schale (7) eine transparente röhrenförmige Struktur ist und ein unterer Teil der unteren äußeren Schale (7) mit dem Verbindungskörper (2) verbunden ist, die äußere Schale eine kreisförmige Hülse mit einem oberen Teil in einer Kegelstumpfform und einem schrägen Querschnitt an einer Innenseite eines oberen Teils der äußeren Schale ist; der Außenzahnkranz (3) innerhalb der äußeren Schale angeordnet ist und an der äußeren Schale anliegt, eine Außenseite des oberen Teils des Außenzahnkranzes (3) mit einem Außenzahnkranz (3) versehen ist, der kegelstumpfförmig an den oberen Teil der Außenschale angepasst ist; ein unterer Teil des Außenzahnkranzes (3) der mit einem Fensterloch (13) versehen ist, und eine Innenwand des Außenzahnkranzes (3) die mit rutschfesten Zähnen versehen ist, und die rutschfesten Zähne, die schräg nach unten gerichtet sind, der Innenzahnkranz (4), der innerhalb der Nut des Innenzahnkranzes (4) angeordnet ist, der Innenzahnkranz (4) aus zwei identischen halbkreisförmigen Teilen besteht, eine Innenseite eines oberen Teils des Innenzahnkranzes (4) mit einem Innenzahnkranz (4) versehen ist, der mit dem schrägen oberen Teil der Nut des Innenzahnkranzes (4) kegelförmig abgestimmt ist, und die Innenzahnkranzbuchse (5) unterhalb des Innenzahnkranzes (4) angeordnet ist; die Innenzahnkranzbuchse (5) aus zwei identischen halbkreisförmigen Teilen besteht und die Innenzahnkranzbuchse jeweils mit einem unteren Teil des Innenzahnkranzes (4) und einem unteren Teil des Außenzahnkranzes (3) in einer Schnapppassung verbunden ist und sich zusammen mit dem unteren Teil des Innenzahnkranzes (4) und dem unteren Teil des Außenzahnkranzes (3) auf und ab bewegt, eine Außenwand des Innenzahnkranzes (4) mit rutschfesten Zähnen versehen ist und die rutschfesten Zähne schräg nach unten gerichtet sind; die Dichtringe (8) innerhalb der Dichtringnuten (11) angeordnet sind.

2. Neue Schnellkupplung für ein Rohr (1) nach Anspruch 1, **dadurch gekennzeichnet, dass** ein Hohlraum zwischen dem Innenzahnkranz (4) und dem Außenzahnkranz (3) ein beweglicher Hohlraum (18) ist, wobei der Hohlraum so konfiguriert ist, dass das Rohr (1) eingeführt werden kann; ein Sichtring beweglich in dem beweglichen Hohlraum (18) angeordnet ist, und der Sichtring einen ringförmigen Körper (19), eine Vielzahl von Vorsprüngen (20), die sich von einer äußeren Seitenwand des ringförmigen Körpers (19) erstrecken, und Vorsprünge (21), die zwischen zwei beliebigen Vorsprüngen (20) angeordnet sind, umfasst; die Vorsprünge (20) gleichmäßig in einer Umfangsrichtung des ringförmigen Körpers (19) verteilt sind.

3. Neue Schnellkupplung für Rohre (1) nach Anspruch 2, **dadurch gekennzeichnet, dass** eine Dicke des ringförmigen Körpers (19) des sichtbaren Rings kleiner ist als eine Höhe des sichtbaren Lochs.

4. Neue Schnellkupplung für Rohre (1) nach Anspruch 3, **dadurch gekennzeichnet, dass** der sichtbare Ring eine grüne Sicherheitsscheibe ist.

5. Neue Schnellkupplung des Rohres (1) nach Anspruch 2, **dadurch gekennzeichnet, dass** eine Anzahl der Vorsprünge (21) zwei ist, wobei die Vorsprünge (21) symmetrisch zueinander angeordnet sind.

6. Neue Schnellkupplung für Rohre (1) nach Anspruch 1 oder 2,**dadurch gekennzeichnet, dass** der obere Teil des Außenzahnkranzes (3) mit einer Vielzahl von vertikalen vertikalen Nuten des Außenzahnkranzes (3) versehen ist.

7. Neue Schnellkupplung für Rohre (1) nach Anspruch 1 oder 2, **dadurch gekennzeichnet, dass** der obere Teil des Innenzahnkranzes (4) mit einer Vielzahl von vertikalen vertikalen Nuten des Innenzahnkranzes (4) versehen ist.

8. Neue Schnellkupplung für Rohre (1) nach Anspruch 1 oder 2, **dadurch gekennzeichnet, dass** zwischen der oberen Außenschale (6) und der unteren Außenschale (7) eine abgestufte Spleißfläche (22) angeordnet ist.

## Revendications

1. Nouveau raccord rapide de tuyau (1), comprenant :
un corps de joint (2), une enveloppe extérieure (6, 7), un engrenage annulaire extérieur (3), un engrenage annulaire intérieur (4) et une douille de l'engrenage annulaire intérieur (5), dans lequel le corps de joint (2) dans son ensemble est une structure tubulaire creuse, une partie inférieure du corps de joint (2) est pourvue d'une interface en spirale, une partie centrale du corps de joint (2) est pourvue d'une partie de raccordement (17) reliée à l'enveloppe extérieure, une partie supérieure du corps de joint (2) est une structure tubulaire pour le gainage dans un tuyau (1), et une paroi extérieure du corps de joint (2) est pourvue d'une pluralité de rainures de bague d'étanchéité (11) et de l'engrenage annulaire intérieur (4) ; une partie supérieure de l'engrenage annulaire intérieur (4) est oblique ; l'enveloppe extérieure (6, 7) est formée par épissage d'une enveloppe extérieure supérieure (6) et d'une enveloppe extérieure inférieure (7) en position haute et basse, l'enveloppe extérieure inférieure (7) est une structure tubulaire transparente et une partie inférieure de l'enveloppe extérieure inférieure (7) est reliée au corps de joint (2), l'enveloppe extérieure est un manchon circulaire dont la partie supérieure est en forme de tronc de cône et dont la section transversale est oblique sur le côté intérieur d'une partie supérieure de l'enveloppe extérieure ; l'engrenage annulaire extérieur (3) est disposé à l'intérieur de l'enveloppe extérieure et vient en butée contre celle-ci, un côté extérieur de la partie supérieure de l'engrenage annulaire extérieur (3) est pourvu d'un cône de l'engrenage annulaire extérieur (3) adapté à la partie supérieure de l'enveloppe extérieure en forme de tronc ; une partie inférieure de l'engrenage annulaire extérieur (3) est pourvue d'un trou de fenêtre (13), et une paroi intérieure de l'engrenage annulaire extérieur (3) est pourvue de dents antidérapantes et les dents antidérapantes sont obliques vers le bas, l'engrenage annulaire intérieur (4) est disposé à l'intérieur de la rainure de l'engrenage annulaire intérieur (4), l'engrenage annulaire intérieur (4) est constitué de deux parties semi-circulaires identiques, un côté intérieur d'une partie supérieure de l'engrenage annulaire intérieur (4) est pourvu d'un cône de l'engrenage annulaire intérieur (4) qui correspond à la partie supérieure oblique de la rainure de l'engrenage annulaire intérieur (4), et la douille de l'engrenage annulaire intérieure (5) est disposée en dessous de l'engrenage annulaire intérieure (4) ; la douille de l'engrenage annulaire intérieure (5) est constituée de deux parties semi-circulaires identiques, et la douille de l'engrenage annulaire intérieur est respectivement reliée à une partie inférieure de l'engrenage annulaire intérieur (4) et à une partie inférieure de l'engrenage annulaire extérieur (3) par encliquetage et se déplace de haut en bas avec la partie inférieure de l'engrenage annulaire intérieur (4) et la partie inférieure de l'engrenage annulaire extérieur (3), une paroi extérieur de l'engrenage annulaire intérieur (4) est pourvue de dents antidérapantes et les dents antidérapantes sont obliques vers le bas, des bagues d'étanchéité (8) sont disposées à l'intérieur des rainures des bagues d'étanchéité (11).

2. Nouveau raccord rapide de tuyau (1) selon la revendication 1, **caractérisé en ce qu'**une cavité entre l'engrenage annulaire intérieur (4) et l'engrenage annulaire extérieur (3) est une cavité mobile (18), la cavité est configurée pour l'insertion du tuyau (1) ; un anneau visuel est disposé de manière mobile dans la cavité mobile (18), et l'anneau visuel comprend un corps annulaire (19), une pluralité de saillies (20) s'étendant depuis une paroi latérale extérieure du corps annulaire (19) et des bossages (21) disposés entre deux saillies (20) quelconques ; les saillies (20) sont uniformément réparties dans la direction circonférentielle du corps annulaire (19).

3. Nouveau raccord rapide de tuyau (1) selon la revendication 2, **caractérisé en ce qu'**une épaisseur du corps annulaire (19) de l'anneau visuel est inférieure à une hauteur du trou visuel.

4. Nouveau raccord rapide de tuyau (1) selon la revendication 3, **caractérisé en ce que** l'anneau visuel est une rondelle de sécurité verte.

5. Nouveau raccord rapide de tuyau (1) selon la revendication 2, **caractérisé en ce que** le nombre de bossages (21) est de deux, les bossages (21) sont disposés symétriquement les uns par rapport aux autres.

6. Nouveau raccord rapide de tuyau (1) selon la revendication 1 ou 2, **caractérisé en ce que** la partie supérieure de l'engrenage annulaire extérieur (3) est pourvue d'une pluralité de rainures verticales de l'engrenage annulaire extérieur (3).

7. Nouveau raccord rapide de tuyau (1) selon la revendication 1 ou 2, **caractérisé en ce que** la partie supérieure de l'engrenage annulaire intérieur (4) est pourvue d'une pluralité de rainures verticales de l'engrenage annulaire intérieur (4).

8. Nouveau raccord rapide de tuyau (1) selon la revendication 1 ou 2, **caractérisé en ce qu'**une surface d'épissage étagée (22) est disposée entre l'enveloppe extérieure supérieure (6) et l'enveloppe extérieure inférieure (7).
